# EUROPÄISCHE PATENTSCHRIFT

(11) **EP 3 454 151 B1**
(45) Veröffentlichungstag und Bekanntmachung des Hinweises auf die Patenterteilung: **14.08.2024**
(21) Anmeldenummer: 17189686.3
(22) Anmeldetag: 06.09.2017
(51) Int. Cl.: G05B 19/418

(54) **AUTOMATISIERUNGSSYSTEM ZUR STEUERUNG EINER MASCHINE ODER ANLAGE**
AUTOMATION SYSTEM FOR CONTROLLING A MACHINE OR AN INSTALLATION
SYSTÈME D'AUTOMATISATION POUR COMMANDER UNE MACHINE OU UNE INSTALLATION

(43) Veröffentlichungstag der Anmeldung: 13.03.2019
(73) Patentinhaber: Leuze electronic GmbH + Co. KG, 73277 Owen/Teck (DE)
(72) Erfinder: Köbel, Herbert, 73277 Owen/Teck (DE); Merk, Thomas, 73257 Köngen (DE)
(74) Vertreter: Ruckh, Rainer Gerhard

(56) Entgegenhaltungen:
- EP-A1- 2 801 934
- EP-A2- 3 070 547
- WO-A1-2016/141963
- DE-A1- 102006 051 102
- DE-A1- 102014 111 733
- US-A1- 2012 035 746
- US-A1- 2013 211 547
- US-A1- 2016 246 294
- LEUZE: "Leuze Electronic kooperiert mit Microsoft", 1 February 2017 (2017-02-01), XP055452447, Retrieved from the Internet <URL:http://www.git-sicherheit.de/printpdf/23260> [retrieved on 20180219]
- CHENG-ZHONG XU ET AL: "URL: A unified reinforcement learning approach for autonomic cloud management", JOURNAL OF PARALLEL AND DISTRIBUTED COMPUTING, ELSEVIER, AMSTERDAM, NL, vol. 72, no. 2, 11 October 2011 (2011-10-11), pages 95 - 105, XP028121783, ISSN: 0743-7315, [retrieved on 20111021], DOI: 10.1016/J.JPDC.2011.10.003

## Beschreibung

Die Erfindung betrifft ein Automatisierungssystem gemäß dem Oberbegriff des Anspruchs 1.

Derartige Automatisierungssysteme dienen generell zur Steuerung von Maschinen oder Anlagen. Maschinen oder Anlagen, auf welche sich die vorliegende Erfindung bezieht, können in unterschiedlichsten Ausprägungen ausgebildet sein, wobei hierzu insbesondere auch bewegliche Systeme, wie zum Beispiel Roboter oder fahrbare Maschinen gehören.

Generell sind zur Steuerung der Maschine oder Anlage eine Maschinensteuerung in einer Steuerungsebene und eine Anzahl von Sensoren und/Aktoren in einer Sensor-Aktorebene vorgesehen. Die Sensoren beziehungsweise Aktoren übernehmen Überwachungsfunktionen oder prozesssteuernde Funktionen an der Maschine oder Anlage. Diese Sensoren und/oder Aktoren sind an Ein- und Ausgänge der Maschinensteuerung angeschlossen. Die Maschinensteuerung liest damit von den Sensoren und/oder Aktoren generierte Signale und generiert, insbesondere in Abhängigkeit dieser Signale, Steuerbefehle, um den Betrieb der Maschine oder Anlage zu steuern.

Die Maschinensteuerung und die Sensoren und/oder Aktoren sind in ein Kommunikationsmodell einer Automatisierungspyramide eingebunden, die neben der Sensor-Aktorebene und der dieser übergeordneten Steuerungsebene weitere Ebenen umfasst. Hierzu gehört im Allgemeinen eine der Steuerungsebene übergeordnete Prozessleitebene mit einem Prozessleitsystem. Darüber gibt es im Allgemeinen eine Betriebsleitebene mit Systemen zur Produktionsdatenerfassung und zur Produktionsfeinplanung sowie eine noch weiter übergeordnete Unternehmensebene mit Systemen zur Bestellabwicklung und Produktionsgrobplanung.

Die Kommunikation ist in einem solchen hierarchischen System eingeschränkt. Die Sensoren und/oder Aktoren werden ausschließlich von der Maschinensteuerung gesteuert. Die Kommunikation von der Sensor-Aktorebene zur Steuerungsebene verläuft zwingend über die Maschinensteuerung.

In Leuze: "Leuze Electronic kooperiert mit Microsoft", 1. Februar 2017, XP055452447, gefunden im Internet: URL:http://www.git-sicherheit.de/printpdf/23260
sind Sensoren beschrieben, die in ein Automatisierungssystem eingebunden sind. Die Sensoren weisen Schnittstellen auf, die um ein OPC UA-Kommunikationsmodell erweitert sind. Damit ist es möglich einen Datenaustausch der Sensoren direkt mit einer Cloud bereitzustellen. Über die Schnittstellen erfolgt ein manipulationssicherer Datenaustausch, in dem zu übertragende Daten mit Authentifizierungen, Autorisierungen, Verschlüsselungen und Datenintegritäten mit Signaturen abgespeichert sind.

Die US 2016/024 62 94 A1 betrifft ein Automatisierungssystem mit Feldgeräten, die mit einer Rechnereinheit in ein Netzwerk eingebunden sind. Für das Automatisierungssystem wird ein Anlagenmodell vorgegeben, das mit der Rechnereinheit kontrolliert wird. Die Feldgeräte können als Sensoren ausgebildet sein. Die Rechnereinheit ist insbesondere ein Cloud-Rechner. Die Feldgeräte können direkt mit der Rechnereinheit Daten austauschen.

Die DE 10 2006 051 102 A1 betrifft ein Prozessautomatisierungssystem zur Bestimmung, zur Überwachung und/oder zum Beeinflussen von unterschiedlichen Prozessgrößen und/oder Zustandsgrößen in zumindest einem verfahrenstechnischen oder analytischen Prozess mit zumindest einer Leitstelle und einer Vielzahl von Feldgeräten. In jedem Feldgerät ist zumindest ein Sensor zum Ermitteln eines Messwerts einer bestimmten Prozessgröße und/oder Zustandsgröße und/oder ein Aktor zum Beeinflussen einer bestimmten Prozessgröße und/oder Zustandsgröße mittels eines Stellwerts vorgesehen. Jedes Feldgerät stellt die zyklisch oder azyklisch ermittelten, messgerätespezifischen Messwerte und/oder Stellwerte der Prozessgröße und/oder Zustandsgröße jedem weiteren Feldgerät des Prozessautomatisierungssystems als Information zur Verfügung, wobei die jeweils aktuelle Information aller ermittelten Messwerte und/oder Stellwerte der Prozessgrößen und/oder Zustandsgrößen jedem Feldgerät als ein aktueller Prozesszustandsvektor verfügbar ist.

Die WO 2016/141963 A1 betrifft ein Verfahren zur Steuerung einer Maschine oder eines Teils einer Maschine, wobei die Maschine oder der Teil der Maschine wiederum aus zumindest einem funktionalen Element besteht. Jedes funktionale Element ist beschreibbar durch genau einen Zustandswert, der den aktuellen Zustand des Elements beschreibt. Es wird ein Zustandsvektor für den aktuellen Zustand der Maschine oder des Teils der Maschine gebildet, indem jede Koordinate des Zustandsvektors genau ein funktionales Element der Maschine oder des Teils der Maschine in seinem jeweils aktuellen Zustand abbildet.

Die EP 3 070 547 A2 betrifft eine cloud-basierte Analysemaschine, mit der Daten eines Automatisierungssystems analysiert werden. Dabei werden Korrelationen zwischen verschiedenen Teilen des Automatisierungssystems gebildet. Ergebnisse dieser Analyse sind Empfehlungen oder Handlungsanweisungen.

In CHENG-ZHONG XU ET AL:"URL:A unified reinforcement learning approach for autonomic cloud management", JOURNAL OF PARALLEL AND DISTRIBUTED COMPUTING, ELSEVIER, AMSTERDAM, NL, Bd. 72, Nr. 2, 11. Oktober 2011, Seiten 95-105, XP028121783, ISSN; 0743-7315, DOI: 10.1016/J.JPDC. 2011.10.003 [gefunden am 2011-10-21]
ist die Beschreibung von virtuellen Maschinen mit jeweils einem Parametersatz offenbart. Um die Performance einer virtuellen Maschine zu optimieren, werden die Parameter derart optimiert, dass ein Erfolgsfaktor maximiert wird.

Die US 2012/0035746 A1 betrifft ein System für das Management von Prozesskontrolleinheiten in einer Fabrik. In einer Prozesskontrolleinheit werden Parametersätze von Feldeinheiten mit gespeicherten Parameterwerten verglichen. Bei einer Abweichung der Parameterwerte löst die Prozesskontrolleinheit definierte Maßnahmen aus.

Die EP 2 801 934 A1 betrifft ein cloudbasiertes Diagnosesystem für industrielle Systeme. Hierzu sind in einer Cloud Informationen von industriellen Einheiten gespeichert. Anhand der Informationen können die industriellen Einheiten identifiziert und deren Konfiguration festgestellt werden. Die Konfigurationen können zu bestimmten Zeiten von den industriellen Einheiten in die Cloud eingelesen werden und für Diagnosezwecke genutzt werden.

Der Erfindung liegt die Aufgabe zugrunde, ein Automatisierungssystem mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Das erfindungsgemäße Automatisierungssystem dient zur Steuerung einer Maschine oder Anlage, welcher Einzelelemente in Form von Sensoren, Aktoren oder Steuerungen zugeordnet sind. Die Einzelelemente tauschen über das Internet mittels manipulationssicherer Protokolle direkt Informationen mit einem wenigstens eine Rechnereinheit aufweisenden Rechnernetzwerk aus. Die Einzelelemente sind anhand eineindeutiger Kennungen von dem Rechnernetzwerk iden tifizierbar. Die Anfangswerte sind von Parametern der Einzelelemente in einem Zustandsvektor zusammengefasst und im Rechnernetzwerk gespeichert. Im Rechnernetzwerk wird während des Betriebs der Maschine oder Anlage zu definierten Zeiten geprüft, ob die aktuell vorliegenden Parameterwerte des Zustandsvektors den Anfangswerten dieses Zustandsvektors entsprechen. Das Rechnernetzwerk generiert abhängig von diesen Prüfungen Strukturbefehle generiert.

Die Erfindung betrifft weiterhin ein Verfahren zum Steuern einer Anlage oder Maschine.

Bei dem erfindungsgemäßen Automatisierungssystem wird über eine Cloud, das heißt über das mit einer Internetverbindung angebundene Rechnernetzwerk eine vom Installationsort der Maschine oder Anlage unabhängige und flexible Kontrolle und Steuerungsmöglichkeit bereitgestellt, wodurch die Funktionalität des Automatisierungssystems erheblich erweitert ist.

Ein wesentlicher Vorteil der Erfindung ist, dass durch Erfassung und Kontrolle der Parameter von Einzelelemente im Zustandsvektor über die Cloud alle wesentlichen Einflussgrößen des Automatisierungssystems über die gesamte Betriebsdauer der Maschine oder Anlage kontrolliert werden können. Dabei werden vorzugsweise die Parameter aller für den Steuerungsprozess relevanten Einzelelemente oder sogar sämtliche Einzelelemente des Automatisierungssystems in den Zustandsvektor mit einbezogen, so dass eine vollständige Kontrolle des Steuerungsprozesses für die Maschine oder Anlage möglich wird.

Der Grundgedanke der Erfindung besteht darin, in einem Zustandsvektor die Anfangswerte von Parameter von Einzelelementen des Automatisierungssystems, die vorzugsweise bei der Inbetriebnahme des Automatisierungssystems vorliegen, zusammenzufassen und danach während des Betriebs der Maschine oder Anlage zeitaufgelöst zu kontrollieren.

Bei der Inbetriebnahme werden von einer autorisierten Bedienperson die für die Applikation der Maschine oder Anlage passenden Parameterwerte der einzelnen Einzelelemente im Zustandsvektor zusammengefasst und dieser Zustandsvektor im Rechnernetzwerk gespeichert.

Vorteilhaft ist hierzu ein Bedienmodul vorgesehen, mittels dessen eine sichere Speicherung des Zustandsvektors im Rechnernetzwerk durchführbar ist.

Mit sicherer Speicherung ist ein fehlersicheres Einspeichern des Zustandsvektors gemeint, das heißt durch sicherheitsrelevante Softwaremodule im Bedienmodul, das vorzugsweise in Form einer App oder dergleichen gebildet ist, ist gewährleistet, dass die Übernahme der Parameterwerte im Zustandsvektor fehlersicher erfolgt. Weiterhin kann im Rechnernetzwerk eine sichere nichtflüchtige Speicherung der Parameterwerte erfolgen, beispielsweise durch ein redundant aufgebautes Speichersystem.

Während des Betriebs der Anlage werden im Rechnernetzwerk in vorgegebenen, vorzugsweise periodischen, Zeitintervallen die aktuell vorliegenden Parameterwerte der Parameter der Einzelelemente des Zustandsvektors mit den gespeicherten Anfangswerten verglichen.

Wird eine Übereinstimmung der aktuellen Parameterwerte mit dem Anfangswert für alle Einzelelemente festgestellt, liegt ein ordnungsgemäßer fehlerfreier Betrieb der Maschine oder Anlage vor. Dabei kann, je nach Auswerteverfahren, für einen fehlerfreien Betrieb gefordert werden, dass die Parameterwerte exakt oder nur innerhalb vorgegebener Toleranzgrenzen übereinstimmen müssen.

Ist eine solche Übereinstimmung gegeben und liegt demzufolge ein fehlerfreier Betrieb vor, werden von dem Rechnernetzwerk Steuerbefehle generiert, durch welche der Betrieb der Maschine oder Anlage ohne Einschränkungen oder Änderungen weitergeführt werden kann.

Diese Steuerbefehle werden vorzugsweise an alle Einzelelemente ausgegeben, so dass deren Steuerfunktionen so weitergeführt werden, dass der Betrieb der Maschine oder Anlage unbeeinträchtigt bleibt.

Wird dagegen im Rechnernetzwerk eine Abweichung der Parameterwerte von den Anfangswerten für einen oder mehrere Parameter des Zustandsvektors registriert, so werden vom Rechnernetzwerk Steuerbefehle für die Einzelelemente generiert, die entweder zu einem eingeschränkten Betrieb der Maschine oder Anlage oder deren Stillstand führen. Damit generiert das Rechnernetzwerk eine Sicherheitsfunktion, die zum Schutz der Maschine oder Anlage beziehungsweise von Personen im Bereich der Maschine oder Anlage führt. Bei einem eingeschränkten Betrieb der Maschine oder Anlage können beispielsweise einzelne Einzelelemente mit Steuerbefehlen des Rechnernetzwerks in den Ruhezustand versetzt werden, wobei es sich vorteilhaft um diejenigen Einzelelemente handelt, deren Parameterwerte von den Anfangswerten des Zustandsvektors abweichen.

Mit der erfindungsgemäßen zeitaufgelösten Kontrolle des Zustandsvektors können durch das Rechnernetzwerk Manipulationen derart aufgedeckt werden, dass für Einzelelemente Parameter unbefugt geändert werden. Weiterhin können hiermit auch Funktionsbeeinträchtigungen oder Ausfälle aufgedeckt werden.

Gemäß einer vorteilhaften Ausgestaltung der Erfindung sind mittels des Rechnernetzwerks die Anfangswerte der Parameter des Zustandsvektors für eine Anlage auf eine weitere, identisch mit ersterer ausgebildete Anlage übertragbar.

Damit wird über die Cloud eine anlagenübergreifende Funktion derart bereitgestellt, dass eine mit dem Zustandsvektors für eine Maschine oder Anlage vorgenommene Parameterfestlegung automatisiert auch für weitere identische Maschinen oder Analgen übernommen werden kann, wobei diese räumlich völlig unabhängig sind, das heißt an völlig verschiedenen Standorten angeordnet sein können. Damit wird auf einfache Weise erreicht, dass mit den einzelnen Maschinen und Anlagen exakt und reproduzierbar dieselben Arbeitsergebnisse erhalten werden.

Zweckmäßig erfolgt die Übertragung von Parameterwerten des Zustandsvektors von einer ersten auf eine weitere Maschine oder Anlage derart, dass mittels des oder eines weiteren Bedienmoduls die Anlage in einen Betriebsmodus "Master" versetzt ist. Die Anfangswerte der Parameter des Zustandsvektors werden in diesem Betriebsmodus von der Anlage in das Rechnernetzwerk übertragen. Die weitere Anlage ist mittels des Bedienmoduls in einen Betriebsmodus "Slave" versetzt. Die Anfangswerte der Parameter des Zustandsvektors werden von dem Rechnernetzwerk in die weitere Anlage übertragen.

Die Einzelelemente des Automatisierungssystems sind neben Sensoren und Aktoren auch Steuerungen. Dabei kann es sich um einzelne, lokale Steuerungen handeln, die einzelne Prozesse innerhalb der Maschine und Anlage steuern, wobei das Rechnernetzwerk für diese Steuerungen eine übergeordnete Steuerungsfunktion wahrnehmen kann.

Alternativ kann als Steuerung auch eine zentrale Maschinensteuerung vorgesehen sein, die in ein Kommunikationsmodell einer Automatisierungspyramide eingebunden ist und an welche alle Sensoren und Aktoren angeschlossen sind.

Gemäß einer vorteilhaften Ausführungsform der Erfindung sind in jedem Einzelelement Steuermittel, Speichermittel und Kommunikationsmittel integriert. Mittels der Steuermittel ist die Maschine oder Anlage in Abhängigkeit eines Steuerbefehls des Rechnernetzwerks steuerbar. In den Speichermitteln ist die Kennung gespeichert. Mittels der Kommunikationsmittel erfolgt die Kommunikation mit dem Rechnernetzwerk.

Damit sind die Sensoren, Aktoren und Steuerungen zur Kommunikation mit der Cloud ausgebildet. Durch die Abspeicherung von eindeutigen Kennungen, insbesondere Adressen, sind diese Sensoren, Aktoren und Steuerungen eindeutig in der Cloud identifizierbar.

Durch die in den Einzelelementen vorgesehenen Kommunikationsmittel können diese mit dem Rechnernetzwerk bidirektional Informationen austauschen.

Die Kommunikation erfolgt dabei zweckmäßig über standardisierte Software-Protokolle, wie zum Beispiel das OPC-UA-Protokoll, wobei hierzu als Kommunikationsmittel in den Einzelelementen entsprechende Software-Module vorhanden sind.

Wesentlich ist, dass diese Kommunikation manipulationssicher ist, was insbesondere durch eine Absicherung der übertragenen Informationen durch Prüfsummen erreicht wird.

Die übertragenen Informationen enthalten vorzugsweise Daten und Metadaten. Bei den Daten kann es sich beispielsweise um Messwerte eines Sensors handeln, welche in Form von Zahlenwerten übertragen werden. Die diesen zugeordneten Metadaten definieren, um welche Art von Messwerten es sich handelt, beispielsweise um Distanzwerte mit einer bestimmten Einheit wie mm oder cm.

Wesentlich ist weiter, dass nicht nur jede Steuerung, sondern auch jeder Sensor oder Aktor Steuermittel enthält. Mit diesen Steuermitteln kann abhängig von einem Steuerbefehl des Rechnernetzwerks die Maschine oder Anlage direkt gesteuert werden. Im einfachsten Fall umfassen die Steuermittel einen Steuerausgang, über welchen ein Signal, im einfachsten Fall ein binäres Schaltsignal, an die Maschine oder Anlage ausgegeben wird.

Gemäß einer vorteilhaften Ausgestaltung der Erfindung sind die Sensoren ganz oder teilweise optische Sensoren, insbesondere zur Objektdetektion, Objektidentifikation oder zur geometrischen Messung eines Objektabstands, einer Oberflächenkontur oder eines Objektvolumens.

Die Erfindung wird im Folgenden anhand der Zeichnungen erläutert. Es zeigen:
- Figur 1:: Schematische Prinzipdarstellung des erfindungsgemäßen Automatisierungssystems.
- Figur 2:: Schematische Darstellung eines Sensors für das Automatisierungssystem gemäß Figur 1.
- Figur 3:: Variante des Automatisierungssystems gemäß Figur 1 mit zwei identischen Anlagen.
- Figur 4:: Ausführungsbeispiel des erfindungsgemäßen Automatisierungssystems.

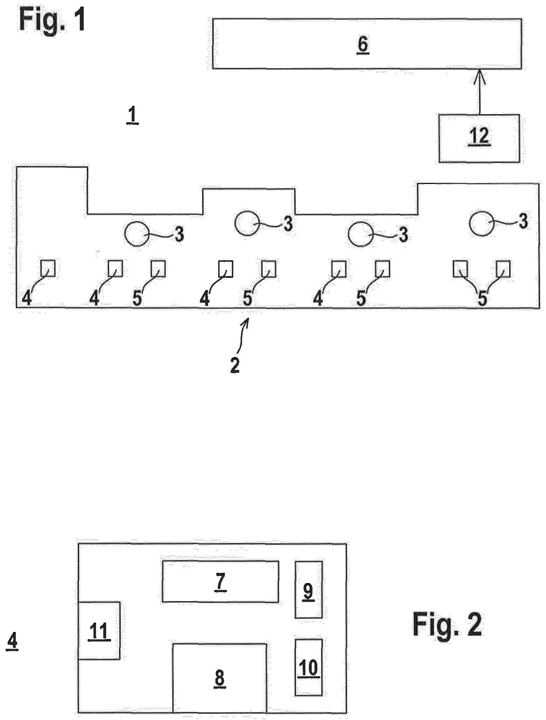

Figur 1 zeigt den prinzipiellen Aufbau des erfindungsgemäßen Automatisierungssytems 1. Mit dem erfindungsgemäßen Automatisierungssystem 1 wird im vorliegenden Fall eine Anlage 2 gesteuert. Generell können mit dem Automatisierungssystem 1 auch Maschinen aller Art gesteuert werden. Weiterhin können mit dem Automatisierungssystem 1 auch mehrere Maschinen oder Anlagen 2 gesteuert werden.

Die Anlage 2 umfasst im vorliegenden Fall mehrere Bearbeitungsstationen, die von Steuerungen 3 gesteuert werden. Weiterhin sind Sensoren 4 und Aktoren 5 vorgesehen. Die Sensoren 4 überwachen Prozesse in der Anlage 2. Die Aktoren 5 kontrollieren Prozesse in der Anlage 2. Die einzelnen Sensoren 4 und Aktoren 5 sind an jeweils eine der Steuerungen 3 angeschlossen. Generell kann auch nur eine zentrale Maschinensteuerung vorgesehen sein, an welche alle Sensoren 4 und Aktoren 5 angeschlossen sind.

Die Sensoren 4, Aktoren 5 und Steuerungen 3 bilden jeweils Einzelelemente des erfindungsgemäßen Automatisierungssystems 1.

Erfindungsgemäß sind die Einzelelemente des Automatisierungssystems 1 über das Internet mit einem verteilten Rechnernetzwerk 6 verbunden, das mehrere dezentrale Rechnereinheiten aufweist. Im einfachsten Fall ist nur eine Rechnereinheit vorgesehen. Die nicht gesondert dargestellten Internetverbindungen können drahtlos oder drahtgebunden ausgeführt sein. Das über das Internet eingebundene Rechnernetzwerk 6 bildet eine Cloud.

Die Einzelelemente und dabei insbesondere die Sensoren 4 und Aktoren 5 sind direkt mit dem Rechnernetzwerk 6 über Internetverbindungen 10 verbunden, so dass diese direkt, das heißt ohne Umweg über die Steuerungen 3 mit dem Rechnernetzwerk 6 kommunizieren können. Die Kommunikation über die Internetverbindung erfolgt über standardisierte Software-Protokolle, wie zum Beispiel dem OPC-UA-Protokoll. Diese Datenübertragung ist manipulationssicher, insbesondere dadurch, dass die übertragenen Informationen durch Prüfsummen abgesichert sind.

Als Informationen werden Daten und Metadaten übertragen, wobei Metadaten zur Charakterisierung beziehungsweise Spezifizierung von bestimmten übertragenen Daten vorgesehen sind.

Figur 2 zeigt schematisch den Aufbau eines Sensors 4 für das Automatisierungssystem 1 gemäß Figur 1. Der Sensor 4 weist in bekannter Weise ein Sensorelement 7 zur Objekterfassung und eine Auswerteeinheit 8 zur Auswertung von Sensorsignalen des Sensorelements 7 auf. Ist der Sensor 4 zur Distanzmessung ausgebildet, werden mit dem Sensorelement 7 Distanzwerte generiert, die als Daten in Form von Zahlenwerten an das Rechnernetzwerk 6 übertragen werden können. Diesen Daten sind Metadaten zugeordnet, die zum Beispiel definieren, dass es sich bei den Daten von Distanzwerte in mm oder cm handelt.

Der Sensor 4 umfasst weiterhin ein Kommunikationsmittel 9, ein Speichermittel 10 und ein Steuermittel 11. Mittels des Kommunikationsmittels 9 erfolgt die Kommunikation mit dem Rechnernetzwerk 6 über die Internetverbindung. Im Speichermittel 10 ist eine Kennung, insbesondere Adresse gespeichert, anhand derer der Sensor 4 eineindeutig identifizierbar ist. Das Steuermittel 11 dient zur Ansteuerung der Anlage 2. Beispielsweise kann das Steuermittel 11 von einem Steuerausgang gebildet sein.

Einen der Figur 2 entsprechenden Aufbau weisen alle weiteren Einzelelemente des Automatisierungssystems 1 auf.

Die Einzelelemente bilden parametrierbare Einheiten.

Bei Steuerungen 3 sind beispielsweise deren Zeitkonstanten zur Durchführung von Steuerungsvorgängen einstellbare Parameter.

Bei Aktoren 5 können beispielweise Stellwege bei der Durchführung von Stellvorgängen einstellbare Parameter sein.

Bei optischen Sensoren 4, die einen Lichtstrahlen emittierenden Sender und einen Lichtstrahlen empfangenden Empfänger aufweisen, kann die Empfindlichkeit durch Vorgabe der Verstärkung von Empfangssignalen des Empfängers oder der Sendeleistung des Senders ein einstellbarer Parameter sein.

Bei Flächendistanzsensoren, das heißt scannenden Distanzsensoren können Schutzfelder, innerhalb derer eine Objekterfassung erfolgen soll, als einstellbare Parameter definiert werden.

Bei Lichtvorhängen können Muting- oder Blanking-Bereiche einstellbare Parameter sein.

Erfindungsgemäß werden bei der Inbetriebnahme der Anlage von einer autorisierten Bedienperson die Parameter-Einstellungen der Einzelelemente der Anlage festgelegt. Die so gebildeten Anfangswerte der Parameter werden in einem Zustandsvektor zusammengefasst und im Rechnernetzwerk 6 gespeichert. Hierzu ist vorzugsweise ein Bedienmodul 12 (Figur 1) vorgesehen, das über eine Internetverbindung direkt mit dem Rechnernetzwerk 6 kommunizieren kann. Mit dem Bedienmodul 12 wird eine sichere Speichermethodik zur Verfügung gestellt, mittels derer der Zustandsvektor sicher, das heißt fehlersicher im Rechnernetzwerk 6 gespeichert wird.

Zur fortlaufenden Kontrolle des Automatisierungssystems 1, insbesondere der Einzelelemente, werden im Rechnernetzwerk 6 in vorgegebenen, vorzugsweise periodischen Zeitintervallen die aktuell vorliegenden Parameterwerte der Einzelelemente mit den Anfangswerten des Zustandsvektors verglichen.

Liegt eine Übereinstimmung vor, ist ein fehlersicherer Betrieb des Automatisierungssystems 1 gegeben und das Rechnernetzwerk 6 generiert Steuerbefehle für die Einzelelemente derart, dass der Betrieb der Anlage 2 unverändert fortgeführt wird.

Liegt dagegen eine Abweichung wenigstens eines Parameterwertes vom jeweiligen Anfangswert fest, so wird durch eine entsprechende Generierung von Steuerbefehlen durch das Rechnernetzwerk 6 eine Sicherheitsmaßnahme eingeleitet. Beispielsweise können das oder die Einzelelemente, für welche Abweichungen der Parameterwert von den Anfangswerten registriert wurden, in den Ruhezustand versetzt werden. Alternativ kann auch die gesamte Anlage 2 stillgesetzt werden.

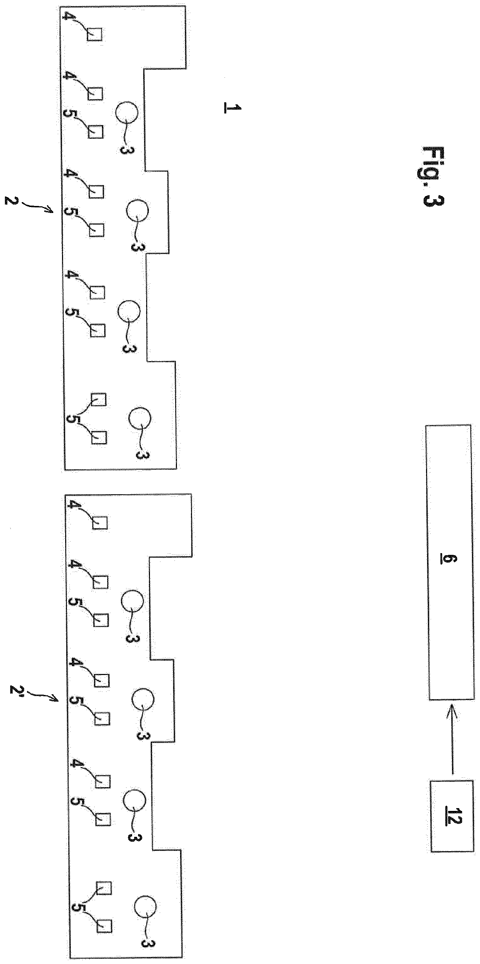

Figur 3 zeigt eine Erweiterung des Automatisierungssystems 1 gemäß Figur 1 dahingehend, dass nunmehr zwei identische Anlagen 2, 2' vorgesehen sind, die jeweils den Aufbau gemäß der Ausführungsform gemäß Figur 1 aufweisen.

Bei dieser Ausführungsform erfolgt für die erste Anlage 2 die Definition und Speicherung des Zustandsvektors in identischer Weise wie bei der Ausführungsform gemäß Figur 1.

Im vorliegenden Fall wird mittels des Rechnernetzwerkes 6 der Zustandsvektor der ersten Anlage 2 an die zweite Anlage 2' übertragen, so dass diese in identischer Weise wie die erste Anlage 2 arbeitet.

Hierzu wird mittels des Bedienmoduls 12 die Anlage 2 zunächst in einen Betriebsmodus "Master" versetzt. In diesem "Master" - Betriebsmodus erhält die Anlage 2 über das Bedienmodul 12 den Zustandsvektor. Dann wird über das Bedienmodul 12 die zweite Anlage 2' in einen "Slave" - Betriebsmodus versetzt. In diesem wird von dem Rechnernetzwerk 6 der Zustandsvektor an die Anlage 2' übertragen.

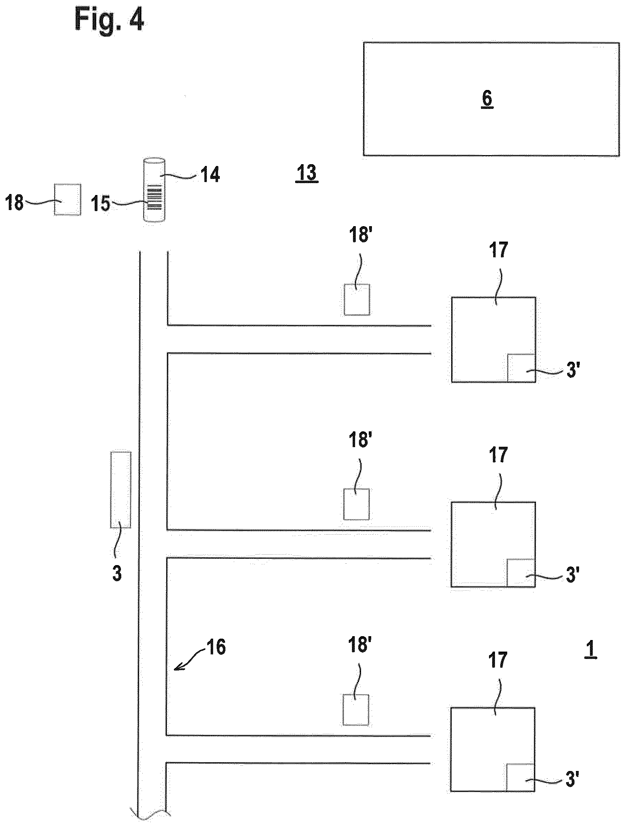

Figur 4 zeigt ein Ausführungsbeispiel einer Analysenanlage 13 zur Analyse von biologischen Proben. Diese Proben sind in Probenröhrchen 14 abgefüllt, welche mit Barcodes 15 gekennzeichnet sind. Die Probenröhrchen 14 werden auf einem Fördersystem 16, das von einer ersten Steuerung 3 gesteuert ist, Analysestationen 17 zugeführt. Die in den Analysestationen 17 automatisch ablaufenden Analysen werden von weiteren Steuerungen 3 gesteuert. Zur Identifikation der Proben sind als Sensoren 4 Codeleser 18, 18' vorgesehen, die die Barcodes auf den Probenröhrchen 14 detektieren können.

Die Steuerungen 3 und die Codeleser sind über Internetverbindungen mit das Rechnernetzwerk 6 verbunden.

Ein Codeleser 18 am Eingang des Fördersystems 16 erkennt auf einem Probenröhrchen 14 den dort vorhandenen Barcode und sendet diese Information in das Rechnernetzwerk 6, wo eine Analyse-Datenbank für die zu untersuchenden Proben vorhanden ist. Ist der Barcode im Rechnernetzwerk 6 bekannt, wird in der Analyse-Datenbank der zugehörige Datensatz herausgesucht und das Rechnernetzwerk 6 teilt dem Codeleser 18 die durchzuführenden Analyseschritte mit. Diese werden über den Codeleser 18 oder direkt über das Rechnernetzwerk 6 den Analysestationen 17 mitgeteilt, so dass diese mit den Steuerungen 3' entsprechend gesteuert werden.

Über den Codeleser 18' beziehungsweise über das Rechnernetzwerk 6 wird dann das Probenröhrchen 14 über das Fördersystem 16 den einzelnen Analysestationen 17 zugeführt, was mit den weiteren Codelesern 18' kontrolliert wird.

Zur Kontrolle dieser Analyseanlage 13 wird ein Zustandsvektor mit Parameterwerten der einzelnen Codeleser 18, 18' und Steuerungen 3, 3' gebildet. Dabei können die Parameter der Codeleser 18, 18' von Tiefeschärfenbereichen, also Abstandsbereichen innerhalb derer Barcodes erfasst werden, vorgesehen sein.

### Bezugszeichenliste

- (1): Automatisierungssystem
- (2,2'): Anlage
- (3, 3'): Steuerung
- (4): Sensor
- (5): Aktor
- (6): Rechnernetzwerk
- (7): Sensorelement
- (8): Auswerteeinheit
- (9): Kommunikationsmittel
- (10): Speichermittel
- (11): Steuermittel
- (12): Bedienmodul
- (13): Analyseanlage
- (14): Probenröhrchen
- (15): Barcode
- (16): Fördersystem
- (17): Analysestation
- (18, 18`): Codeleser

## Patentansprüche

1. Automatisierungssystem (1) zur Steuerung (3) einer Maschine oder Anlage (2), welcher Einzelelemente in Form von Sensoren (4), Aktoren (5) oder Steuerungen (3) zugeordnet sind, wobei die Einzelelemente über das Internet mittels manipulationssicherer Protokolle direkt Informationen mit einem wenigstens eine Rechnereinheit aufweisenden Rechnernetzwerk (6) austauschen, wobei die Einzelelemente anhand eineindeutiger Kennungen von dem Rechnernetzwerk (6) identifizierbar sind, **dadurch gekennzeichnet, dass** Anfangswerte von Parametern der Einzelelemente in einem Zustandsvektor zusammengefasst und im Rechnernetzwerk (6) gespeichert sind und dass im Rechnernetzwerk (6) während des Betriebs der Maschine oder Anlage (2) zu definierten Zeiten geprüft wird, ob die aktuell vorliegenden Parameterwerte des Zustandsvektors den Anfangswerten dieses Zustandsvektors entsprechen, und dass das Rechnernetzwerk (6) abhängig von diesen Prüfungen Steuerbefehle generiert.

2. Automatisierungssystem nach Anspruch 1, wobei bei der Inbetriebnahme der Anlage (2) vorliegende Parameterwerte als Anfangswerte der Parameter im Zustandsvektor zusammengefasst und in dem Rechnernetzwerk (6) gespeichert sind.

3. Automatisierungssystem nach einem der Ansprüche 1 oder 2, wobei ein Bedienmodul (12) vorgesehen ist, mittels dessen eine sichere Speicherung des Zustandsvektors im Rechnernetzwerk (6) durchführbar ist.

4. Automatisierungssystem nach einem der Ansprüche 1 bis 3, wobei mittels des Rechnernetzwerks (6) in vorgegebenen Zeitintervallen während des Betriebs der Maschine oder Anlage (2) im Zustandsvektor zusammengefasste Anfangswerte der Parameter mit den jeweils aktuell vorliegenden Parameterwerten des Zustandsvektors auf Übereinstimmung geprüft werden.

5. Automatisierungssystem nach Anspruch 4, wobei die Überprüfungen periodisch erfolgen.

6. Automatisierungssystem nach einem der Ansprüche 1 bis 5, wobei die von dem Rechnernetzwerk (6) in Abhängigkeit einer Prüfung von Parameterwerten des Zustandsvektors generierten Steuerbefehle an alle Einzelelemente ausgegeben werden, deren Parameter im Zustandsvektor zusammengefasst sind.

7. Automatisierungssystem nach einem der Ansprüche 1 bis 6, wobei der Zustandsvektor die Parameter aller Einzelelemente der Maschine oder Anlage (2) umfasst.

8. Automatisierungssystem nach einem der Ansprüche 1 bis 5, wobei in dem Rechnernetzwerk (6) bei festgestellter Übereinstimmung der Anfangswerte und aktuellen Werte der Parameter des Zustandsvektors Steuerbefehle generiert werden, mittels derer der Betrieb der Maschine oder Anlage (2) freigegeben ist.

9. Automatisierungssystem nach Anspruch 6, wobei in dem Rechnernetzwerk (6) bei festgestellter Abweichung von Anfangswerten und aktuellen Werten von Parametern des Zustandsvektors Steuerbefehle generiert werden, mittels derer der Betrieb der Maschine und Anlage (2) nur eingeschränkt freigegeben oder gestoppt ist.

10. Automatisierungssystem nach einem der Ansprüche 1 bis 9, wobei mittels des Rechnernetzwerks (6) die Anfangswerte der Parameter des Zustandsvektors für eine Anlage (2) auf eine weitere, identisch mit ersterer ausgebildete Anlage (2) übertragbar sind.

11. Automatisierungssystem nach Anspruch 10, wobei mittels des oder eines weiteren Bedienmoduls (12) die Anlage (2) in einen Betriebsmodus "Master" versetzt ist, dass die Anfangswerte der Parameter des Zustandsvektors in diesem Betriebsmodus von der Anlage (2) in das Rechnernetzwerk (6) übertragen werden, dass die weitere Anlage (2) mittels des Bedienmoduls (12) in einen Betriebsmodus "Slave" versetzt ist, und dass die Anfangswerte der Parameter des Zustandsvektors von dem Rechnernetzwerk (6) in die weitere Anlage (2`) übertragen werden.

12. Automatisierungssystem nach einem der Ansprüche 1 bis 11, wobei in jedem Einzelelement Steuermittel (11), Speichermittel (10) und Kommunikationsmittel (9) integriert sind, wobei mittels der Steuermittel (11) die Maschine oder Anlage (2) in Abhängigkeit eines Steuerbefehls des Rechnernetzwerks (6) steuerbar ist, wobei in den Speichermitteln (10) die Kennung gespeichert ist, und wobei mittels der Kommunikationsmittel (9) die Kommunikation mit dem Rechnernetzwerk (6) erfolgt.

13. Automatisierungssystem nach einem der Ansprüche 1 bis 12, wobei die Kommunikation mit dem Rechnernetzwerk (6) über standardisierte Software-Protokolle, insbesondere über OPC-UA-Protokolle erfolgt.

14. Automatisierungssystem nach Anspruch 13, wobei zwischen dem Rechnernetzwerk (6) und weiteren Teilnehmern, insbesondere Sensoren (4) und/oder Aktoren (5) Informationen ausgetauscht werden, welche Daten und die Daten charakterisierende Metadaten enthalten.

15. Automatisierungssystem nach Anspruch 14, wobei die übertragenen Informationen mit Prüfnummem abgesichert sind.

16. Automatisierungssystem nach einem der Ansprüche 1 bis 15, wobei die Sensoren ganz oder teilweise optische Sensoren, insbesondere zur Objektdetektion, Objektidentifikation oder zur geometrischen Messung eines Objektabstands, einer Oberflächenkontur oder eines Objektvolumens sind.

17. Verfahren zum Steuern einer Maschine oder Anlage (2) mittels eines Automatisierungssystems (1), wobei der Maschine oder Anlage (2) zugeordnete Sensoren (4), Aktoren (5) oder Steuerungen (3) vorgesehen sind, die Einzelelemente bilden, wobei die die Einzelelemente über das Internet mittels manipulationssicherer Protokolle direkt Informationen mit einem wenigstens eine Rechnereinheit aufweisenden Rechnernetzwerk (6) austauschen, wobei die Einzelelemente anhand ein eindeutiger Kennungen von dem Rechnernetzwerk (6) identifizierbar sind, **dadurch gekennzeichnet, dass** Anfangswerte von Parametern der Einzelelemente in einem Zustandsvektor zusammengefasst und im Rechnernetzwerk (6) gespeichert sind und dass im Rechnernetzwerk (6) während des Betriebs der Maschine oder Anlage (2) zu definierten Zeiten geprüft wird, ob die aktuell vorliegenden Parameterwerte des Zustandsvektors den Anfangswerten dieses Zustandsvektors entsprechen, und dass das Rechnernetzwerk (6) abhängig von diesen Prüfungen Steuerbefehle generiert.

## Claims

1. An automation system (1) for controlling (3) a machine or installation (2), to which individual elements in the form of sensors (4), actuators (5) or controllers (3) are assigned, wherein the individual elements exchange information directly with a computer network (6) having at least one computer unit via the Internet by means of tamper-proof protocols, wherein the individual elements can be identified by the computer network (6) by means of unambiguous identifiers,
**characterised in that** initial values of parameters of the individual elements are combined in a state vector and stored in the computer network (6) and **in that**, during operation of the machine or system (2), the computer network (6) checks at defined times whether the currently available parameter values of the state vector correspond to the initial values of this state vector, and **in that** the computer network (6) generates control commands as a function of these checks.

2. An automation system according to claim 1, wherein parameter values present during commissioning of the system (2) are summarised as initial values of the parameters in the state vector and stored in the computer network (6).

3. An automation system according to one of claims 1 or 2, wherein an operating module (12) is provided, by means of which secure storage of the state vector in the computer network (6) can be carried out.

4. An automation system according to one of claims 1 to 3, wherein initial values of the parameters summarised in the state vector are checked for correspondence with the respective currently available parameter values of the state vector by means of the computer network (6) at predetermined time intervals during operation of the machine or system (2).

5. An automation system according to claim 4, wherein the checks are carried out periodically.

6. An automation system according to one of claims 1 to 5, wherein the control commands generated by the computer network (6) as a function of a check of parameter values of the state vector are issued to all individual elements whose parameters are summarised in the state vector.

7. An automation system according to one of claims 1 to 6, wherein the state vector comprises the parameters of all individual elements of the machine or system (2).

8. An automation system according to one of claims 1 to 5, wherein control commands are generated in the computer network (6) when the initial values and current values of the parameters of the state vector are found to match, by means of which control commands the operation of the machine or plant (2) is enabled.

9. An automation system according to claim 6, wherein control commands are generated in the computer network (6) when a deviation is detected between initial values and current values of parameters of the state vector, by means of which control commands the operation of the machine and system (2) is only enabled or stopped to a limited extent.

10. An automation system according to one of claims 1 to 9, wherein by means of the computer network (6) the initial values of the parameters of the state vector for an installation (2) can be transferred to a further installation (2) designed identically to the first installation.

11. An automation system according to claim 10, wherein the system (2) is set to a "master" operating mode by means of the or a further operating module (12), that the initial values of the parameters of the state vector in this operating mode are transmitted from the system (2) to the computer network (6), that the further system (2) is set to a "slave" operating mode by means of the operating module (12), and that the initial values of the parameters of the state vector are transmitted from the computer network (6) to the further system (2').

12. An automation system according to one of claims 1 to 11, wherein control means (11), memory means (10) and communication means (9) are integrated in each individual element, wherein the machine or system (2) can be controlled by means of the control means (11) as a function of a control command of the computer network (6), wherein the identifier is stored in the memory means (10), and wherein communication with the computer network (6) takes place by means of the communication means (9).

13. An automation system according to one of claims 1 to 12, wherein the communication with the computer network (6) takes place via standardised software protocols, in particular via OPC UA protocols.

14. An automation system according to claim 13, wherein information containing data and metadata characterising the data is exchanged between the computer network (6) and other participants, in particular sensors (4) and/or actuators (5).

15. An automation system according to claim 14, wherein the transmitted information is secured with check numbers.

16. An automation system according to one of claims 1 to 15, wherein the sensors are wholly or partly optical sensors, in particular for object detection, object identification or for geometric measurement of an object distance, a surface contour or an object volume.

17. A method for controlling a machine or installation (2) by means of an automation system (1), wherein sensors (4), actuators (5) or controllers (3) assigned to the machine or installation (2) are provided, which form individual elements, wherein the individual elements directly exchange information with a computer network (6) having at least one computer unit via the Internet by means of tamper-proof protocols, wherein the individual elements can be identified by the computer network (6) by means of unique identifiers, **characterised in that** initial values of parameters of the individual elements are combined in a state vector and stored in the computer network (6) and **in that**, during operation of the machine or system (2), the computer network (6) checks at defined times whether the currently available parameter values of the state vector correspond to the initial values of this state vector, and **in that** the computer network (6) generates control commands as a function of these checks.

## Revendications

1. Système d'automatisation (1) pour commander (3) une machine ou une installation (2), auquel sont affectés des éléments individuels sous forme de capteurs (4), d'actionneurs (5) ou de dispositifs de commande (3),
dans lequel les éléments individuels échangent des informations directement avec un réseau informatique (6) comportant au moins une unité informatique via Internet au moyen de protocoles inviolables, dans lequel les éléments individuels peuvent être identifiés par le réseau informatique (6) au moyen d'identificateurs non ambigus,
**caractérisé par le fait que** les valeurs initiales des paramètres des éléments individuels sont combinées dans un vecteur d'état et stockées dans le réseau informatique (6) et **par le fait que**, pendant le fonctionnement de la machine ou du système (2), le réseau informatique (6) vérifie à des moments définis si les valeurs de paramètres actuellement disponibles du vecteur d'état correspondent aux valeurs initiales de ce vecteur d'état, et **par le fait que** le réseau informatique (6) génère des instructions de commande en fonction de ces vérifications.

2. Système d'automatisation selon la revendication 1, dans lequel les valeurs de paramètres présentes lors de la mise en service du système (2) sont résumées en tant que valeurs initiales des paramètres du vecteur d'état et stockées dans le réseau informatique (6).

3. Système d'automatisation selon l'une des revendications 1 ou 2, dans lequel un module d'exploitation (12) est prévu, au moyen duquel un stockage sécurisé du vecteur d'état dans le réseau informatique (6) peut être effectué.

4. Système d'automatisation selon l'une des revendications 1 à 3, dans lequel les valeurs initiales des paramètres résumés dans le vecteur d'état sont vérifiées au moyen du réseau informatique (6) à des intervalles de temps prédéterminés pendant le fonctionnement de la machine ou du système (2) pour vérifier leur correspondance avec les valeurs respectives des paramètres actuellement disponibles du vecteur d'état.

5. Système d'automatisation selon la revendication 4, dans lequel les contrôles sont effectués périodiquement.

6. Système d'automatisation selon l'une des revendications 1 à 5, dans lequel les instructions de commande générées par le réseau informatique (6) en fonction d'une vérification des valeurs des paramètres du vecteur d'état sont émis vers tous les éléments individuels dont les paramètres sont résumés dans le vecteur d'état.

7. Système d'automatisation selon l'une des revendications 1 à 6, dans lequel le vecteur d'état comprend les paramètres de tous les éléments individuels de la machine ou du système (2).

8. Système d'automatisation selon l'une des revendications 1 à 5, dans lequel des instructions de commande sont générées dans le réseau informatique (6) lorsque les valeurs initiales et les valeurs actuelles des paramètres du vecteur d'état s'avèrent correspondre, grâce à ces ordres de commande le fonctionnement de la machine ou de l'installation (2) est activé.

9. Système d'automatisation selon la revendication 6, dans lequel les instructions de commande sont générées dans le réseau informatique (6) lorsqu'un écart est détecté entre les valeurs initiales et les valeurs actuelles des paramètres du vecteur d'état, au moyen desquelles les instructions de commande pour le fonctionnement de la machine et de l'installation (2) n'est activé ou arrêté que dans une mesure limitée.

10. Système d'automatisation selon l'une des revendications 1 à 9, dans lequel, au moyen du réseau informatique (6), les valeurs initiales des paramètres du vecteur d'état pour une installation (2) peuvent être transférées à une autre installation (2) conçue de manière identique à la première installation.

11. Système d'automatisation selon la revendication 10, dans lequel l'installation (2) est réglée sur un mode de fonctionnement "maître" au moyen du ou d'un autre module de commande (12), que les valeurs initiales des paramètres du vecteur d'état dans ce mode de fonctionnement sont transmises de l'installation (2) au réseau informatique (6), que l'autre installation (2) est réglée sur un mode de fonctionnement "esclave" au moyen du module de commande (12), et que les valeurs initiales des paramètres du vecteur d'état sont transmises du réseau informatique (6) à l'autre installation (2').

12. Système d'automatisation selon l'une des revendications 1 à 11, dans lequel les moyens de commande (11), les moyens de mémoire (10) et les moyens de communication (9) sont intégrés dans chaque élément individuel, dans lequel la machine ou le système (2) peut être commandé au moyen des moyens de commande (11) en fonction d'un ordre de commande du réseau informatique (6), dans lequel l'identificateur est stocké dans les moyens de mémoire (10), et dans lequel la communication avec le réseau informatique (6) a lieu au moyen des moyens de communication (9).

13. Système d'automatisation selon l'une des revendications 1 à 12, dans lequel la communication avec le réseau informatique (6) s'effectue via des protocoles logiciels standardisés, en particulier via des protocoles OPC UA.

14. Système d'automatisation selon la revendication 13, dans lequel des informations contenant des données et des métadonnées caractérisant les données sont échangées entre le réseau informatique (6) et d'autres participants, en particulier des capteurs (4) et/ou des actionneurs (5).

15. Système d'automatisation selon la revendication 14, dans lequel les informations transmises sont sécurisées par des numéros de contrôle.

16. Système d'automatisation selon l'une des revendications 1 à 15, dans lequel les capteurs sont en tout ou partie des capteurs optiques, notamment pour la détection d'objets, l'identification d'objets ou la mesure géométrique d'une distance d'objet, d'un contour de surface ou d'un volume d'objet.

17. Procédé de commande d'une machine ou d'une installation (2) au moyen d'un système d'automatisation (1), dans lequel sont prévus des capteurs (4), des actionneurs (5) ou des dispositifs de commande (3) affectés à la machine ou à l'installation (2), qui forment des éléments individuels, dans lequel les éléments individuels échangent directement des informations avec un réseau informatique (6) comportant au moins une unité informatique via Internet au moyen de protocoles infalsifiables, dans lequel les éléments individuels peuvent être identifiés par le réseau informatique (6) au moyen d'identifiants uniques, **caractérisé par le fait que** les valeurs initiales des paramètres des éléments individuels sont combinées dans un vecteur d'état et stockées dans le réseau informatique (6) et **par le fait que**, pendant le fonctionnement de la machine ou du système (2), le réseau informatique (6) vérifie à des moments définis si les valeurs de paramètres actuellement disponibles du vecteur d'état correspondent aux valeurs initiales de ce vecteur d'état, et **par le fait que** le réseau informatique (6) génère des instructions de commande en fonction de ces vérifications.
